# DEMANDE DE BREVET EUROPEEN

(11) **EP 3 984 965 A1**
(43) Date de publication de la demande: **20.04.2022**
(21) Numéro de dépôt: 21201570.5
(22) Date de dépôt: 08.10.2021
(51) Int. Cl.: C02F 3/12, C02F 103/00, B65D 88/76, E03B 3/03

(54) **INSTALLATION DE TRAITEMENT ET/OU DE STOCKAGE D EAU, METTANT EN UVRE UNE CUVE ET UN PIÉZOMÈTRE SOLIDAIRES L UN DE L AUTRE**

(30) Priorité: 12.10.2020 FR 2010413
(71) Demandeur: Innoclair, 56700 Kervignac (FR)
(72) Inventeur: RAULT, Hugues, 56700 KERVIGNAC (FR)
(74) Mandataire: Lequien, Philippe

(57) **Abrégé**

L'invention concerne une installation de traitement et/ou de stockage d'eaux, comprenant une cuve (1) présentant une paroi externe (10) délimitant une enceinte de traitement et un tube piézométrique et/ou de décompression (2), la cuve (1) et le tube piézométrique et/ou de décompression (2) étant destinés à être enterrés à proximité l'un de l'autre, la cuve (1) et le tube piézométrique et/ou de décompression (2) étant solidaires l'un de l'autre.

## Description

Le domaine de l'invention est celui de la conception et de la fabrication des équipements de traitement des eaux usées.

Plus précisément, l'invention concerne en particulier, mais non exclusivement, une station d'épuration individuelle, du type intégrant un bassin d'aération et un bassin de clarification.

Dans le cadre de l'assainissement non collectif, on distingue les habitations reliées au réseau de collecte de leur commune et celles qui ne le sont pas. Jusqu'à récemment, les habitations non reliées au réseau de collecte étaient équipées généralement, voire dans le meilleur des cas, d'une fosse sceptique pour le traitement des eaux usées domestiques (hors eaux pluviales) associée à un bac à sable filtrant.

L'évolution des normes et règlementations imposent aux habitations non reliées au réseau de collecte de leur commune de disposer d'un système d'assainissement individuel, visant à renvoyer au milieu naturel des eaux traitées de qualité satisfaisante prédéterminée.

Dans ce contexte, une solution pour les particuliers non reliés au réseau de collecte de leur commune consiste notamment à recourir à l'installation d'une micro-station d'épuration.

Une micro-station d'épuration peut se définir comme une solution de traitement des eaux usées domestiques, fonctionnant à échelle réduite selon le même principe qu'une station d'épuration collective de grandes villes, ceci par la mise en œuvre d'un procédé dit « à boue activée » ou « à culture fixée ».

Classiquement, les micro-stations d'épuration sont conçues pour réaliser les phases de traitement suivantes :
- l'aération, selon laquelle les « boues » en suspension subissent un traitement d'épuration, ceci en créant de manière séquentielle des périodes aérobies et des périodes d'anoxie, ce qui va permettre d'engendrer un phénomène de digestion des matières organiques, ainsi qu'une réduction des nitrates et des nitrites ;
- la décantation, visant à retenir au fond de la cuve les matières les plus lourdes et à faire remonter en surface les plus légères ;
- la clarification (éventuellement précédée d'une pré-clarification), visant à séparer les boues légères et persistantes de l'eau épurée : dans cette phase, les boues restantes sont renvoyées dans le bassin de décantation ou dans le bassin de réaction, ou rejetées au fossé, tandis que l'eau épurée est extraite de la micro-station pour être en général dispersée dans le sol.

Selon l'état de la technique, on distingue deux types de micro-station d'épuration :
- les stations opérant une épuration par boue activée ;
- les stations à culture fixée dans lesquelles les micro-organismes chargés du traitement se fixent sur un support intégré dans la cuve.

L'invention s'applique tant aux stations « à boue activée » qu'aux stations de traitement par « culture fixée ».

On rappelle que, schématiquement, les micro-stations sont des cuves constituant des réservoirs d'eau contenant un ensemble de mécanismes (compresseur d'air, pompe, tableau électrique...), et sont généralement destinées à être enterrées.

L'invention concerne justement les micro-stations dont les cuves sont enterrées.

Une fois enterrées, les cuves subissent donc la pression du sol qui s'exerce sur les parois du réservoir et qui engendre un risque d'écrasement latéral et/ou vertical de la cuve. De plus, le principe d'Archimède se vérifie quand de l'eau est présente dans le sol dans lequel la micro-station est enterrée, ce qui peut conduire à soulever la cuve sous la pression de l'eau, notamment au moment de la vidange de celle-ci, au point de nécessiter une intervention de génie civil.

Aussi, pour limiter ce risque, les entreprises de génie civil utilisent classiquement du béton en tant que dalle de lestage basse ou haute, ainsi que des sangles d'arrimage qui accrochent la cuve au béton. En outre, un puits de décompression peut être réalisé sur la hauteur de la cuve pour dégager la pression de l'eau vers la surface. Parallèlement, les fabricants de cuves utilisent des renforts latéraux, horizontaux ou verticaux, pour permettre à la cuve de la micro-station de résister à la pression.

En complément de la fonction « décompression » du puits de, celui-ci peut être pourvu d'un piézomètre installé à proximité de la cuve de la micro-station. Les deux fonctions sont généralement regroupées au sein d'un tube qui permet à minima de vérifier le niveau de l'eau présente dans le sol dans lequel la micro-station est enterrée, ceci avant d'envisager de vidanger la cuve de la micro-station en vue de procéder à sa maintenance.

Classiquement, un tel tube piézométrique et/ou de décompression prend la forme d'un tube débouchant à ses deux extrémités et permettant l'entrée d'eau dans l'évidement central du tube. L'extrémité supérieure est généralement obturée par un bouchon dévissable et perforé. Le bouchon est accessible au niveau du sol et la personne qui veut vérifier le niveau d'eau présente dans le sol accède au bouchon pour ouvrir le tube et vérifier le niveau d'eau dans celui-ci. Bien entendu, si le niveau d'eau est trop haut, la pression qui s'exerce sur la cuve selon le principe d'Archimède indique que la période est inappropriée à la vidange de la cuve, au risque que celle-ci ne se soulève et se dégage de la cavité dans laquelle elle est enterrée.

Selon l'art antérieur, la cuve de la micro-station et le tube piézométrique et/ou de décompression sont fabriqués, stockés, livrés et installés séparément.

Bien entendu, c'est le même installateur qui procède à l'installation de la cuve et à celle du tube piézométrique et/ou de décompression.

En pratique, une fois la cuve installée dans l'excavation prévue à cet effet, l'installateur installe également le tube piézométrique et/ou de décompression avant de procéder au remblaiement de la cavité.

Or, même avec une solide expérience et avec les habitudes de la pratique, il arrive couramment que l'installateur fasse procéder au remblaiement de la cavité autour de la cuve sans avoir installé le tube piézométrique et/ou de décompression.

Dans ce cas, l'installateur doit donc faire à nouveau creuser le sol pour réaliser une cavité dédiée à la mise en place du tube piézométrique et/ou de décompression. Il en résulte évidemment une perte de temps relativement importante et préjudiciable au prix de revient de l'installation.

Dans le pire des cas, il peut être oublié (ou négligé) de mettre en place le tube piézométrique et/ou de décompression.

L'invention a pour objectif de pallier cet inconvénient de l'art antérieur.

Plus précisément, l'invention a pour objectif de proposer une installation de traitement et/ou de stockage d'eau selon une technique assurant à l'installateur la bonne conformité de l'installation, s'agissant de la mise en œuvre du tube piézométrique et/ou de décompression à proximité de la cuve de la micro-station.

L'invention a également pour objectif de fournir une telle installation qui permette un gain de temps d'installation comparé aux solutions de l'art antérieur.

Ces objectifs, ainsi que d'autres qui apparaitront par la suite, sont atteints grâce à l'invention qui a pour objet une installation de traitement et/ou de stockage d'eaux, comprenant une cuve présentant une paroi externe délimitant une enceinte de traitement et un tube piézométrique et/ou de décompression, la cuve et le tube piézométrique et/ou de décompression étant destinés à être enterrés à proximité l'un de l'autre, le tube piézométrique et/ou de décompression prenant la forme d'un tube essentiellement vertical, ménageant un évidement central reliant deux extrémités débouchantes,
le tube piézométrique et/ou de décompression étant destiné, quand de l'eau est présente dans le sol dans lequel la cuve est enterrée, à dégager la pression de l'eau vers la surface et/ou à permettre de vérifier le niveau de l'eau présente dans le sol dans lequel la cuve est enterrée,
caractérisé en ce que la cuve et le tube piézométrique et/ou de décompression sont solidaires l'un de l'autre.

Ainsi, comme cela ressort clairement de la définition de l'invention, la cuve de la micro-station et le piézomètre associé sont couplés l'un à l'autre de telle sorte que l'installation dans l'excavation de la cuve de la micro-station implique nécessairement également l'installation du tube piézométrique et/ou de décompression dans l'excavation.

En d'autres termes, il n'est pas possible pour l'installateur de ne pas installer le tube piézométrique et/ou de décompression.

En outre, on note que, grâce à l'invention, l'installation de la cuve et du tube piézométrique et/ou de décompression est obtenue de façon non seulement plus pratique qu'avec la technique de l'art antérieur, mais également de façon plus rapide. En effet, la cuve et le tube piézométrique et/ou de décompression forment un ensemble dans lequel ils sont solidaires l'un de l'autre de telle sorte que leur installation est effectuée dans le même temps, tandis que l'installation de la cuve et celle du tube piézométrique et/ou de décompression sont réalisées successivement selon l'art antérieur.

Selon une solution avantageuse, la paroi externe présente une surface d'assise contre laquelle une extrémité inférieure du tube piézométrique et/ou de décompression vient en appui.

Ainsi, la tenue mécanique du couplage du tube piézométrique et/ou de décompression avec la cuve de la micro-station est assurée, en procurant de cette façon un maintien en position du tube piézométrique et/ou de décompression par rapport à la paroi externe de la cuve complémentaire des divers moyens de couplage du tube piézométrique et/ou de décompression sur la hauteur de la paroi externe de la cuve.

Préférentiellement, la paroi externe présente des éléments en saillie présentant chacun une surface d'appui essentiellement plane contre laquelle un matériau de remblaiement est susceptible d'exercer une force dirigée vers le fond de la cuve, la surface d'assise étant ménagée sur la surface d'appui d'un des éléments en saillie.

Ainsi, le simple fait de remblayer autour de la cuve assure le maintien de la cuve au fond de l'excavation. En effet, les graviers et les sables (généralement utilisés pour remblayer, pour leur fluidité) vont épouser les contours de la forme extérieure de la cuve, exerçant ainsi une poussée vers le bas sur les éléments en saillie. L'opération d'installation de la cuve est donc grandement facilitée et raccourcie, dans la mesure où il n'est plus nécessaire de faire une dalle de béton et/ou de puit de décompression.

Cela étant, il reste nécessaire bien évidemment d'installer un tube piézométrique et/ou de décompression.

En outre, les éléments en saillie assurent également une fonction de renfort de la cuve.

Dans ce contexte, il apparaît donc avantageux d'utiliser un des éléments en saillie pour ménager sur celui-ci une surface d'appui pour le tube piézométrique et/ou de décompression .

Avantageusement, les deux extrémités débouchantes du tube piézométrique et/ou de décompression sont composées d'une extrémité débouchante inférieure et d'une extrémité débouchante supérieure, et un passage d'eau est ménagé entre la surface d'assise et l'extrémité débouchante inférieure du tube.

On note que le tube piézométrique et/ou de décompression peut être rallongé et s'intégrer sous la cuve afin d'amplifier sa capacité à capter la poussée d'Archimède et de la transférer dans le tube.

Ainsi, l'eau peut s'écouler vers l'intérieur du tube à partir de la base du tube, c'est-à-dire à partir de son extrémité débouchante inférieure. L'eau peut donc remonter dans le tube à partir du niveau le plus bas du tube.

Cela étant le tube présente avantageusement en outre une pluralité de fentes débouchantes dans l'évidement central.

De cette façon, dans l'hypothèse selon laquelle la base du tube viendrait à s'obstruer, l'écoulement d'eau vers l'intérieur du tube reste possible par l'intermédiaire des fentes débouchantes.

Selon une caractéristique avantageuse, la paroi externe définit, selon une section transversale horizontale, un périmètre hors tout, et le tube piézométrique et/ou de décompression est positionné à l'intérieur du périmètre hors tout.

De cette façon, la présence et l'installation du tube piézométrique et/ou de décompression ne nécessite pas d'augmenter la taille de l'excavation et ne nuit donc pas au temps d'installation.

Avantageusement, la paroi externe présente une surface supérieure dans laquelle est ménagé un regard et portant une trappe destinée à obturer le regard, l'extrémité supérieure du tube s'étendant au même niveau en hauteur que la surface supérieure.

Ainsi, le niveau de remblaiement s'effectue autour de la cuve au même niveau que celui autour du tube piézométrique et/ou de décompression.

De plus, on évite de cette façon de faire dépasser l'extrémité supérieure du tube au-dessus du sol, ce qui serait préjudiciable tant esthétiquement que fonctionnellement, vis-à-vis du passage d'une tondeuse par exemple.

Selon une autre caractéristique additionnelle, la paroi externe s'étend à partir d'un fond et présente un élément en saillie supérieur et un élément en saillie inférieur à proximité du fond, et le tube s'étend en hauteur de l'élément en saillie inférieur jusqu'à la surface supérieure.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 est une vue schématique en perspective d'une installation de traitement de stockage d'eau selon l'invention ;
- la figure 2 est une vue schématique de côté d'une installation de traitement et/ou de stockage d'eau selon l'invention ;
- la figure 3 est une vue schématique de dessus d'une installation de traitement et/ou de stockage d'eau selon l'invention.

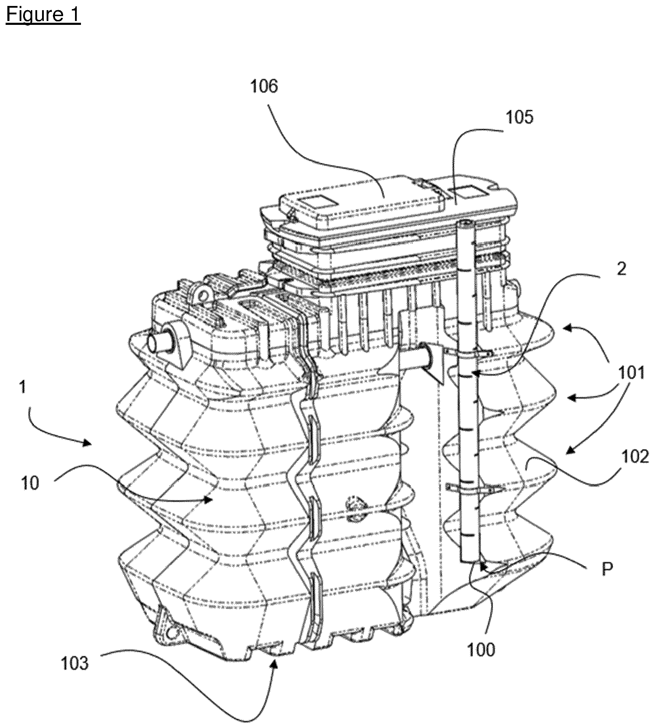

En référence aux figures 1 à 3, l'installation de traitement et/ou de stockage d'eau selon l'invention comprend d'une part une cuve 1 et, d'autre part, un tube piézométrique et/ou de décompression 2, la cuve 1 et le tube piézométrique et/ou de décompression 2 étant tous deux destinés à être enterrés à proximité l'un de l'autre, et la cuve et le tube piézométrique et/ou de décompression étant solidaires l'un de l'autre selon le principe de l'invention.

La cuve présente une paroi externe 10 délimitant une enceinte de traitement et dans laquelle sont formés des éléments en saillie 101.

Tel que cela est illustré par les figures 1 à 3, la paroi externe 10 présente une face externe orientée vers l'extérieur de la cuve 1.

Selon la structure décrite dans le document de brevet publié sous le numéro FR2999625, les éléments en saillie de la paroi externe présentent chacun une surface d'appui 102 essentiellement plane et contre laquelle un matériau de remblaiement est susceptible d'exercer une force dirigée vers le fond 103 de la cuve. Ces éléments en saillie prennent chacun la forme d'une ceinture autour de la cuve, ces ceintures étant, selon le présent mode de réalisation, au nombre de quatre. De plus, les éléments en saillie 101 présentent une section de forme triangulaire, comprenant d'une part la surface d'appui 102 et, d'autre part, une surface inférieure 104. Ainsi, la surface d'appui 102 forme, avec la surface inférieure 104 d'un même élément en saillie, un angle d'environ 45°. Toutefois, il est bien entendu envisageable que la surface d'appui des éléments en saillie soit horizontale ou seulement légèrement inclinée vers le bas.

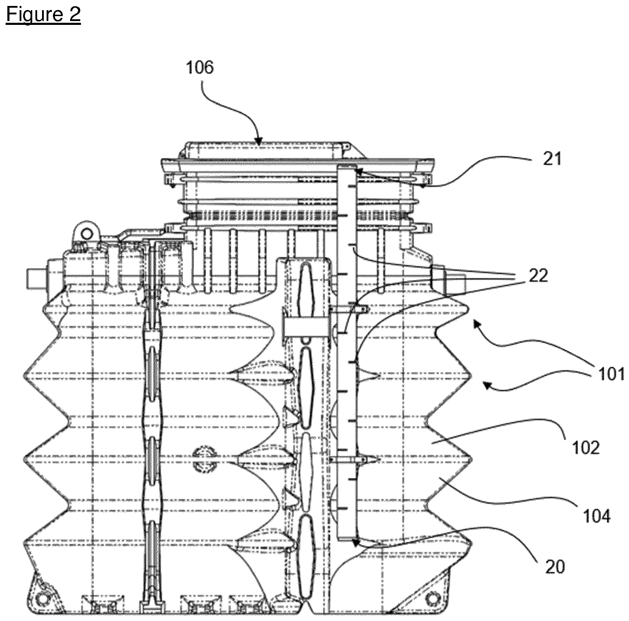

Par ailleurs, le tube piézométrique et/ou de décompression 2 prend la forme d'un tube essentiellement vertical, tel qu'illustré par les figures 1 et 2, ce tube ménageant un évidement central reliant deux extrémités débouchantes, l'une inférieure 20 et l'autre supérieure 21. En outre, le tube présente une pluralité de fentes débouchantes 22 dans l'évidement central, régulièrement réparties sur la hauteur du tube. En l'occurrence, tel que cela apparait sur les figures 1 et 2, ces fentes débouchantes 22 s'étendent perpendiculairement à l'axe longitudinal du tube, sur une partie de la circonférence du tube.

Tel que cela est illustré par les figures 1 à 3, le tube piézométrique et/ou de décompression 2 est situé du côté de la face externe de la paroi externe 10 de la cuve 1. En effet, pour rappel, tube piézométrique et/ou de décompression 2 est destiné, quand de l'eau est présente dans le sol dans lequel la cuve 1 est enterrée, à dégager la pression de l'eau vers la surface et/ou à permettre de vérifier le niveau de l'eau présente dans le sol dans lequel la cuve 1 est enterrée.

A cet effet, et tel que cela est visible sur les figures 1 à 3, les extrémités débouchantes ainsi que les fentes débouchantes 22 permettent une communication fluidique entre l'évidement central du tube piézométrique et/ou de décompression 2 et l'espace extérieur au tube, c'est-à-dire également l'espace extérieur à la cuve 1. De cette manière, si de l'eau est présente dans le sol dans lequel la cuve 1 est enterrée, et est alors susceptible d'exercer une pression sur la surface externe de la paroi externe 10 de la cuve 1, alors cette eau peut pénétrer dans le tube piézométrique et ou de décompression 2 par son extrémité débouchante inférieure 20 et/ou les fentes débouchantes 22, remonter à l'intérieur de l'évidement central du tube puis ressortir du tube par l'extrémité débouchante supérieure 21, dégageant de la sorte la pression de l'eau vers la surface.

En d'autres termes, tel que cela ressort des figures et de la définition donnée précédemment d'un tube piézométrique et/ou de décompression, il n'y a pas de communication fluidique entre le tube piézométrique et/ou de décompression et l'intérieur de la cuve.

Le tube piézométrique et/ou de décompression 2 est solidarisé à la cuve par l'intermédiaire de moyens d'accrochage. Le tube est accroché sur la cuve par exemple au moyen de deux sangles élastiques fixées de part en part de celui-ci sur les éléments en saillie 101.

De plus, le tube piézométrique et/ou de décompression repose, par l'intermédiaire de son extrémité inférieure 20, sur une surface d'assise 100. Le tube vient au contact, et donc en appui, sur cette surface d'assise 100. Tel que cela apparaît sur les figures 1 et 2, cette surface d'assise est constituée par un épaulement ménagé sur la surface d'appui 102 d'un des éléments en saillie 101.

En complément des fentes débouchantes 22 dans l'évidement central, un passage d'eau P est ménagé entre la surface d'assise 100 et l'extrémité inférieure du tube du tube piézométrique et/ou de décompression.

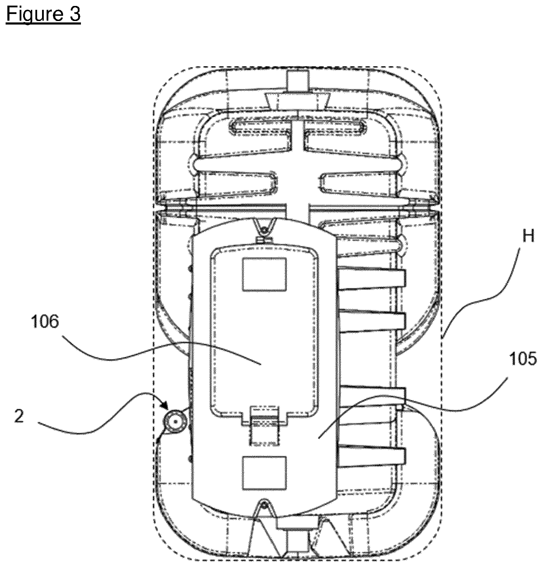

En référence à la figure 3, la paroi externe 10 définit, selon une section transversale horizontale (ou selon une vue de dessus telle que fournie par la figure 3), un périmètre hors tout H (illustré en traits pointillés sur la figure 3). Selon un agencement avantageux, le tube piézométrique et/ou de décompression 2 est positionné à l'intérieur de ce périmètre hors tout H.

Tel qu'illustré par les figures 1 à 3, la paroi externe 10 présente une surface supérieure 105 dans laquelle est ménagée un regard (non représenté). La surface supérieure porte une trappe 106 destinée à obturer le regard.

Tel que cela apparaît sur la figure 2, l'extrémité supérieure 21 du tube constituant le tube piézométrique et/ou de décompression s'étend au même niveau en hauteur que la surface supérieure 104 de la paroi externe.

Selon un autre aspect du présent mode de réalisation, la paroi externe présente un élément en saillie 101 supérieur au voisinage de la paroi supérieure, et un élément en saillie 101 inférieur à proximité du fond 103. Selon cette configuration, le tube s'étend en hauteur de l'élément en saillie inférieur jusqu'à la surface supérieure 104.

## Revendications

1. Installation de traitement et/ou de stockage d'eaux, comprenant une cuve (1) présentant une paroi externe (10) délimitant une enceinte de traitement et un tube piézométrique et/ou de décompression (2), la cuve (1) et le tube piézométrique et/ou de décompression (2) étant destinés à être enterrés à proximité l'un de l'autre, le tube piézométrique et/ou de décompression (2) prenant la forme d'un tube essentiellement vertical, ménageant un évidement central reliant deux extrémités débouchantes,
le tube piézométrique et/ou de décompression (2) étant destiné, quand de l'eau est présente dans le sol dans lequel la cuve (1) est enterrée, à dégager la pression de l'eau vers la surface et/ou à permettre de vérifier le niveau de l'eau présente dans le sol dans lequel la cuve (1) est enterrée,
**caractérisé en ce que** la cuve (1) et le tube piézométrique et/ou de décompression (2) sont solidaires l'un de l'autre.

2. Installation de traitement et/ou de stockage d'eaux selon la revendication 1, **caractérisé en ce que** la paroi externe (10) présente une surface d'assise (100) contre laquelle une extrémité débouchante inférieure (20) du tube piézométrique et/ou de décompression (2) vient en appui.

3. Installation de traitement et/ou de stockage d'eaux selon la revendication 2, **caractérisé en ce que** la paroi externe (10) présente des éléments en saillie (101) présentant chacun une surface d'appui (102), la surface d'assise (100) étant ménagée sur la surface d'appui (102) d'un des éléments en saillie (101).

4. Installation de traitement et/ou de stockage d'eaux selon l'une des revendications 2 et 3, **caractérisé en ce que** les deux extrémités débouchantes du tube piézométrique et/ou de décompression (2) sont composées d'une extrémité débouchante inférieure (20) et d'une extrémité débouchante supérieure (21), et **en ce qu'**un passage d'eau (P) est ménagé entre la surface d'assise (100) et l'extrémité débouchante inférieure (20).

5. Installation de traitement et/ou de stockage d'eaux selon la revendication 4, **caractérisé en ce que** le tube piézométrique et/ou de décompression (2) présente en outre une pluralité de fentes débouchantes (22) dans l'évidement central.

6. Installation de traitement et/ou de stockage d'eaux selon l'une quelconque des revendications 1 à 5, **caractérisé en ce que** la paroi externe (10) définit, selon une section transversale horizontale, un périmètre hors-tout (H), et **en ce que** le tube piézométrique et/ou de décompression (2) est positionné à l'intérieur du périmètre hors-tout.

7. Installation de traitement et/ou de stockage d'eaux selon l'une quelconque des revendications 4 à 6, **caractérisé en ce que** la paroi externe (10) présente une surface supérieure (105) dans laquelle est ménagé un regard et portant une trappe (106) destinée à obturer le regard, l'extrémité débouchante supérieure (21) du tube piézométrique et/ou de décompression (2) s'étendant au même niveau en hauteur que la surface supérieure (105).

8. Installation de traitement et/ou de stockage d'eaux selon les revendications 4 et 7, **caractérisé en ce que** la paroi externe (10) s'étend à partir d'un fond (103) et présente un élément en saillie (101) supérieur et un élément en saillie (101) inférieur à proximité du fond (103), et **en ce que** le tube piézométrique et/ou de décompression (2) s'étend en hauteur de l'élément en saillie inférieur jusqu'à la surface supérieure (105).
